(19) Europäisches Patentamt / European Patent Office / Office européen des brevets

(11) **EP 1 798 076 B1**

(12) **FASCICULE DE BREVET EUROPEEN**

(45) Date de publication et mention
de la délivrance du brevet:
**28.10.2009 Bulletin 2009/44**

(51) Int Cl.:
***B60C 23/04*** *(2006.01)*

(21) Numéro de dépôt: **06126013.9**

(22) Date de dépôt: **13.12.2006**

(54) **Emplâtre pour fixer un système électronique sur un pneumatique**

Haltevorrichtung zum Montieren eines elektronischen Bauteils auf einem pneumatischen Reifen

Mounting patch for mounting an electronic assembly on a pneumatic tire

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **13.12.2005 FR 0512724**

(43) Date de publication de la demande:
**20.06.2007 Bulletin 2007/25**

(73) Titulaires:
• **Société de Technologie Michelin**
  **63000 Clermont-Ferrand (FR)**
• **Michelin Recherche et Technique S.A.**
  **1763 Granges-Paccot (CH)**

(72) Inventeur: **Bertrand, David**
**25000, Besancon (FR)**

(74) Mandataire: **Dequire, Philippe Jean-Marie Denis**
**23, Place des Carmes-Déchaux**
**SGD/LG/PI F35 Ladoux**
**63040 Clermont-Ferrand Cedex 09 (FR)**

(56) Documents cités:
WO-A1-2007/048621      DE-A1- 10 255 138
DE-A1- 19 940 086      DE-A1-102005 027 998
US-A1- 2005 076 992

## Description

Domaine de l'invention

La présente invention concerne les moyens de fixation de systèmes électroniques sur un pneumatique. Le terme « pneumatique » désigne ici tous types de bandages élastiques, soumis en service à une pression interne ou non.

Arrière-plan technologique

Il est connu d'utiliser des systèmes électroniques pour surveiller certains paramètres d'un pneumatique, comme par exemple l'état de gonflage, la pression de gonflage ou la température du pneumatique. Lorsque le système électronique est fixé sur le pneumatique, plusieurs moyens de fixation peuvent être envisagés. Certains moyens connus utilisent un élément de liaison en matériau souple, destiné à servir d'interface entre le pneumatique (qui est souple) et le système électronique (qui est rigide). Dans ce qui suit, cet élément de liaison sera désigné par « emplâtre » ; parfois, on parle aussi de « patch ».

L'emplâtre peut remplir plusieurs fonctions, dont deux sont particulièrement importantes : il fixe le système électronique sur le pneumatique et il le met à l'abri des déformations que subit le pneumatique.

A titre d'exemple, les documents US 6,462,650, WO 03/076216, US 2005/0076982 et US 2005/0076992 divulguent un emplâtre collé sur la surface intérieure du pneumatique. La souplesse de l'emplâtre résultant du choix du matériau et de sa géométrie (voir en particulier US 2005/0126668) permet d'éviter de déformer le système électronique et de limiter les contraintes qui lui sont transmises ; ce découplage contribue à sa longévité. D'autres emplâtres dont le but est découpler mécaniquement un système électronique du pneumatique sont décrits dans les documents DE 199 40 086, et US 2006/0237109 et WO-A-2007 048 621. Le document WO-A-2007 048 621 relève de l'article 54(3) CBE.

Un autre moyen de fixation connu d'un système électronique consiste à le glisser dans une sorte de 'poche' créée au préalable dans le pneumatique. US 2005/0217774 décrit une solution de ce type. Ce moyen présente l'avantage d'éviter la phase de collage de l'emplâtre. Il est utilisable notamment pour des systèmes de mesure de pression et de température.

Un autre moyen de fixation comprend un emplâtre conçu, non pas pour isoler totalement du pneumatique le système électronique ou sa partie sensible, mais au contraire pour amplifier les déformations ou les vitesses de déformation subies par un élément sensible du système électronique. C'est par exemple le cas dans les systèmes de génération d'énergie embarqués, tel un système où un film piezo-électrique est relié au pneumatique par l'intermédiaire d'une structure qui amplifie certaines déformations ou leur vitesse. Un exemple d'un tel emplâtre est décrit dans US 2006/006728.

Description de l'invention

Dans certaines applications qui nécessitent la présence d'un système électronique associé à un pneumatique et qui réalisent par exemple un contrôle des déformations du pneumatique, il est capital d'établir une liaison fiable et reproductible entre un élément sensible (le capteur) du système électronique et le pneumatique lui-même. Il s'agit alors de gérer correctement le couplage entre le pneumatique et le capteur tout en permettant un découplage entre le pneumatique et le système électronique.

De plus, dans le cas où il est nécessaire de mesurer des déformations ou des contraintes dans plusieurs directions, un emplâtre ayant une structure, des matériaux constitutifs et/ou une géométrie appropriés peut être utilisé pour adapter la transmission des déformations ou des contraintes dans les différentes directions pour les rendre compatibles avec la sensibilité du capteur et permettre une mesure de qualité avec un bon rapport signal/bruit.

Pour assurer une bonne longévité du collage de l'emplâtre sur le pneumatique il est important de prendre en compte les contraintes qui s'établissent à l'interface emplâtrepneumatique. L'emplâtre est donc conçu pour permettre une bonne transmission des contraintes et/ou déformations à l'élément sensible du capteur tout en provoquant un minimum de contraintes à son interface avec le pneumatique.

Un emplâtre selon l'invention permet de remplir les fonctions suivantes : (i) fixer le système électronique sur le pneumatique ; (ii) transmettre efficacement les déformations du pneumatique au capteur en équilibrant les sensibilités dans le cas d'une mesure multidimensionnelle ; (iii) limiter les contraintes développées à l'interface emplâtre/pneumatique ; et (iv) limiter les contraintes et déformations transmises au système électronique. Il s'agit donc de maximiser la transmission des contraintes au capteur tout en minimisant les contraintes qui naissent à l'interface entre l'emplâtre et le pneumatique.

L'invention répond au besoin de réaliser et de contrôler l'ensemble des fonctions détaillées ci-dessus, de manière à permettre la fixation sur un pneumatique d'un système électronique qui réalise des mesures de déformation et/ou de contraintes liées intimement aux déformations du pneumatique.

Cet objectif est atteint par un emplâtre destiné à fixer un système électronique sur un pneumatique, le système électronique comprenant un capteur, l'emplâtre comportant un pied ayant une surface destinée à être fixée sur le pneumatique, le pied comportant au moins deux portions reliées entre elles par au moins un pont destiné à être couplé mécaniquement au capteur, ce pont ayant, dans une coupe parallèle à la surface du pied destinée à être fixée sur le pneumatique, une section dont la surface est inférieure à la surface comprise entre les portions du pied reliées par le pont dans la même coupe, le pont reliant continûment, dans cette coupe, les deux portions.

Le terme « pied » est ici utilisé selon la terminologie habituelle de l'homme du métier. Il s'agit d'une pièce de liaison comportant des portions destinées à assurer le contact avec le pneumatique. Le pied est destiné à porter, directement ou indirectement (c'est-à-dire par l'intermédiaire d'un support) un système électronique. Par « pont », on entend ici une partie du pied qui établit une liaison entre les portions destinées à assurer le contact avec le pneumatique. Le pont peut avoir une surface destinée à être en contact avec le pneumatique, mais ce n'est pas nécessairement le cas. Préférentiellement, il existe au moins une direction dans laquelle la dimension du pont est inférieure à la dimension correspondante des portions du pied que relie le pont.

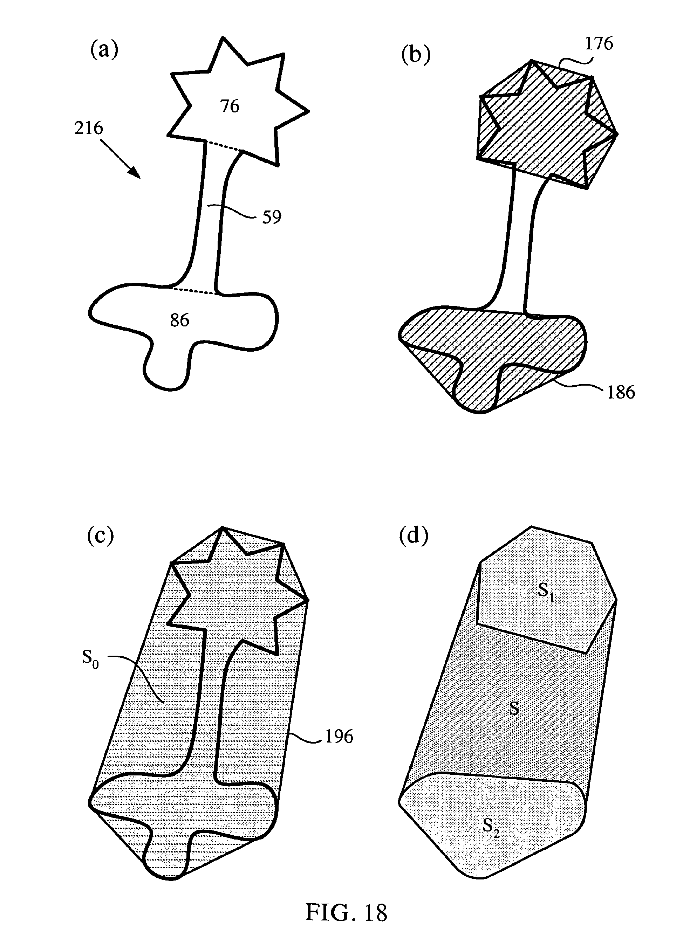

La « surface comprise entre les portions du pied » dans une coupe donnée est une notion intuitivement claire pour des géométries simples. La figure 18 illustre comment cette surface peut être déterminée pour des géométries plus complexes.

La définition d'un emplâtre selon l'invention s'intéresse à la géométrie de l'emplâtre dans une « coupe parallèle à la surface du pied destinée à être fixée sur le pneumatique ». La surface du pied destinée à être fixée sur le pneumatique n'est pas nécessairement plane, mais selon un mode de réalisation particulier, elle est plane. Dans ce cas particulier, on considère la géométrie de l'emplâtre dans un plan parallèle à la surface du pied destinée à être fixée sur le pneumatique.

Selon un mode de réalisation préférentiel, l'épaisseur maximale du pont, mesurée dans une direction perpendiculaire à la surface du pied destinée à être fixée sur le pneumatique, est inférieure ou égale à celle d'au moins une des portions qu'il relie, et son volume est inférieur au volume séparant les deux portions. Pour des géométries complexes, le « volume séparant les deux portions » est déterminé en analogie à la détermination de la « surface comprise entre les deux portions » décrite plus haut.

De façon préférentielle, la surface de la section du pont, dans une coupe parallèle à la surface du pied destinée à être fixée sur le pneumatique, est inférieure à 30 % de la surface comprise entre les portions du pied reliées par le pont dans la même coupe.

Préférentiellement, le pont a, dans toute coupe parallèle à la surface du pied destinée à être fixée sur le pneumatique, une section dont la surface est inférieure à la surface comprise entre les portions du pied reliées par le pont dans la même coupe. De façon préférentielle, la surface de la section du pont, dans toute coupe parallèle à la surface du pied destinée à être fixée sur le pneumatique, est inférieure à 30 % de la surface comprise entre les portions du pied reliées par le pont dans la même coupe.

Selon un mode de réalisation préférentiel, le pied, dans une coupe parallèle à la surface du pied destinée à être fixée sur le pneumatique, a une section en « H ». Cette section permet de concentrer les contraintes subies par les deux barres formant le « H » dans le pont reliant les deux barres. Selon un autre mode de réalisation préférentiel, le pied, dans une coupe parallèle à la surface du pied destinée à être fixée sur le pneumatique, a une section en « Z ». La forme en « H » a l'avantage d'une plus grande symétrie, ce qui facilite l'interprétation des signaux ; en revanche, la forme en « Z » permet de différencier des cisaillements dans les deux sens parallèles aux barres. Lorsqu'un emplâtre en « H » ou en « Z » est fixé sur un pneumatique, l'orientation des barres peut être adaptée aux déformations que l'on souhaite mesurer ; elle peut être radiale (c'est-à-dire dans un plan comprenant l'axe de rotation du pneumatique) ou selon la direction périphérique ou selon toute direction intermédiaire.

Le pied peut être réalisé dans un ou plusieurs matériaux caoutchouteux ou non. De préférence, les deux portions du pied sont réalisées dans un matériau souple, mais peu extensible , ce qui permet une meilleure transmission des contraintes au pont. La transmission peut également être améliorée par le renforcement des portions du pied à l'aide de renforts. Il est par ailleurs avantageux d'entourer le capteur d'un petit volume de matériau plus rigide.

L'emplâtre peut en outre comprendre un support qui est distinct du pied et destiné à porter un élément du système électronique autre que le capteur, de sorte qu'il n'y a pas de contact direct entre le pied et cet élément. Ceci est particulièrement avantageux lorsque le système électronique comporte des éléments qui doivent être mis à l'abri des déformations et/ou contraintes subies par le pont. Selon un mode de réalisation préférentiel, le support comprend des moyens pour isoler ces éléments du système électronique des contraintes et déformations subies par le pied.

Cette isolation peut être obtenue par un choix judicieux des matériaux et/ou des formes géométriques du support, le but étant de diminuer la raideur à rigidité constante. Cela peut se faire à l'aide d'un rétrécissement du support par rapport à une direction perpendiculaire à la surface du pied destinée à être fixée sur le pneumatique, le rétrécissement se situant, vu le long de cette direction, entre le pied et cet élément du système électronique. Plus le rétrécissement réduit la section de contact, et moins les contraintes sont transmises : si le support se rétrécissait en un seul point, il n'y aurait plus de transmission des contraintes. En outre, il peut être avantageux de combler le volume dégagé par le rétrécissement avec un matériau compressible de faible rigidité, de façon à réduire le degré de liberté de mouvement de l'extrémité du pied sans pour autant rigidifier le pied et à optimiser les caractéristiques vibratoires (aspects amortissant et dissipatif).

Pour augmenter la durée de vie du système formé par le pneumatique et l'emplâtre, il est avantageux de choisir une géométrie du pied telle que, lorsque l'emplâtre est fixé sur un pneumatique, l'angle entre (i) la surface d'interface entre l'emplâtre et le pneumatique et (ii) la tangente à la surface libre (c'est-à-dire non fixée sur le pneumatique) du pied en tout point du contour de la surface d'interface entre l'emplâtre et le pneumatique est inférieur à 90°, et de préférence même inférieur à 45°. Ainsi on réduit autant que possible la concentration de contraintes susceptibles, entre autres, de créer des amorces de fissures.

L'invention concerne également un ensemble comprenant :

- un système électronique comportant un capteur et

- un emplâtre selon l'invention, le capteur étant couplé mécaniquement au pont du pied de l'emplâtre.

Selon un mode de réalisation préférentiel, l'emplâtre de l'ensemble possède un axe de symétrie perpendiculaire à la surface du pied destinée à être fixée sur le pneumatique et la liaison électrique entre le capteur et un élément isolé du système électronique est assurée par un fil conducteur passant sensiblement le long de cet axe. Ce positionnement du fil conducteur permet notamment de réduire la sollicitation mécanique du fil lorsque l'emplâtre est sollicité en flexion. Lorsque l'emplâtre est de surcroît sollicité en extension, il est préférable d'effectuer la liaison électrique entre le capteur et ledit au moins un élément du système électronique par un conduit extensible tel un ressort hélicoïdal centré autour de cet axe.

L'ensemble selon l'invention est de préférence utilisé avec un capteur permettant de mesurer des contraintes normales et/ou de cisaillement en trois directions.

L'invention concerne également un pneumatique comportant au moins un tel ensemble.

L'invention sera mieux comprise grâce à la description des dessins selon lesquels :

- la figure 1 représente schématiquement une vue en perspective partielle d'un pneumatique pourvu d'un emplâtre ;

- la figure 2 représente schématiquement une vue partielle en coupe d'un emplâtre selon l'invention ;

- la figure 3 représente schématiquement une vue en perspective d'un support « en H » selon l'invention ;

- la figure 4 représente schématiquement une coupe selon I-I du support de la figure 3 ;

- la figure 5 représente schématiquement une vue partielle en coupe de deux emplâtres ;

- la figure 6 représente schématiquement en vue de dessus d'un emplâtre selon l'invention soumis à différents modes de sollicitation ;

- la figure 7 représente schématiquement en vue du dessus deux emplâtres selon l'invention ;

- la figure 8 représente schématiquement des emplacements possibles pour un emplâtre selon l'invention ;

- les figures 9 à 11 représentent schématiquement des vues en coupe parallèle à la surface du pneumatique, d'emplâtres selon l'invention ;

- la figure 12 représente schématiquement une vue en coupe partielle d'un emplâtre selon l'invention, passant par l'axe de symétrie de l'emplâtre ;

- la figure 13 représente schématiquement des coupes selon II-II de plusieurs variantes du support de la figure 12 ;

- les figures 14 à 16 représentent schématiquement des vues en coupe partielle d'emplâtres selon l'invention ;

- la figure 17 représente schématiquement des vues en perspective d'emplâtres selon l'invention ;

- la figure 18 illustre la détermination de la surface comprise entre les portions du pied.

Ces figures sont données dans un but purement illustratif et n'ont aucun caractère limitatif.

Description de modes de réalisation

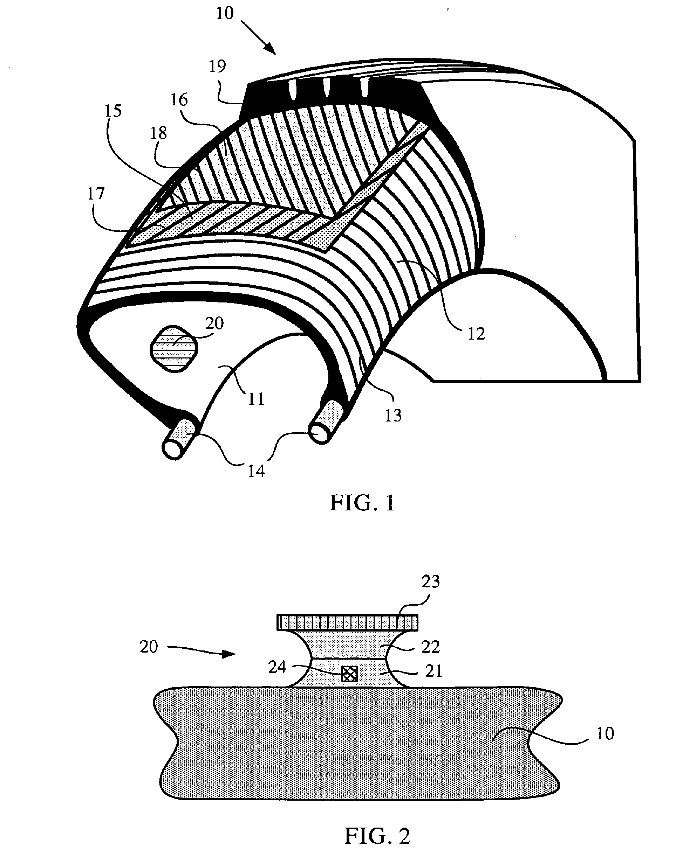

La figure 1 représente schématiquement un pneumatique 10 traditionnel, comprenant une gomme intérieure 11 en gomme imperméable, une nappe carcasse 12 constituée de fils 13 enrobés de mélange caoutchouteux (c'est-à-dire de composition de caoutchouc comportant au moins un élastomère et une charge), de renforts circonférentiels 14 qui maintiennent le pneumatique 10 sur la jante (non représentée), une armature de sommet comprenant deux nappes 15, 16. Chacune des nappes 15 et 16 est renforcée par des fils 17 et 18 qui sont inclinés par rapport à un plan perpendiculaire à l'axe de rotation du pneumatique. Une bande de roulement 19 est posée sur les nappes 15 et 16 ; c'est cette bande de roulement 19 qui assure le contact du pneumatique 10 avec la route. Le pneumatique est équipé d'un emplâtre 20 dont la structure est illustrée dans les figures suivantes.

La figure 2 représente schématiquement une vue en coupe partielle d'un emplâtre 20 selon l'invention, collé sur un pneumatique 10, par exemple sur une partie de la gomme intérieure 11 (figure 1). L'emplâtre 20 comporte un pied 21 et un support 22 portant une platine 23 qui contient un système électronique. Un capteur 24 se trouve à l'intérieur du pied 21.

Le pied 21 permet de fixer l'emplâtre 20 sur le pneumatique 10 et de transmettre les déformations et contraintes subies par le pneumatique 10 au capteur 24. Le support 22 remplit plusieurs fonctions :

- il permet de fixer la platine 23 et donc le système électronique ;

- il assure le découplage mécanique entre la platine 23 et le pied 21 : il est ainsi possible d'utiliser une platine 23 peu ou pas déformable, compatible avec les impératifs mécaniques de l'électronique ;

- il permet d'assurer une liaison électrique entre le capteur et le système électronique supporté par la platine 23.

Dans le cas où le système électronique est suffisamment miniaturisé et peut être intégré ou rapporté sur ou contre le capteur 24, l'emplâtre 20 peut ne pas comporter de support 22.

Vu que le pied 21 et le support 22 remplissent des fonctions différentes, il peut être intéressant d'utiliser des matériaux ou des assemblages de matériaux différents pour le pied 21 et le support 22. En l'occurrence, le pied 21 et le support 22 sont réalisés en mélanges caoutchouteux ayant une rigidité adaptée. Dans le cas (non limitatif) où différents matériaux sont utilisés, le pied 21 et le support 22 peuvent être assemblées avant que le pied 21 ne soit fixé sur le pneumatique 10, ou après. La platine 23 peut être rendue solidaire du support 22 avant ou après que les autres assemblages aient eu lieu (assemblage des deux parties pied et support ou assemblage du pied sur le pneumatique). Cette souplesse concernant l'ordre d'assemblage peut offrir des degrés de liberté intéressants pour faciliter la fabrication.

En l'occurrence, l'interface entre le pied 21 et le support 22 est plane. Il s'agit d'une caractéristique particulière mais l'invention ne se limite pas à ce type d'interface. L'interface peut ne pas exister si les matériaux constituant les deux parties sont identiques et que celles-ci sont fabriquées d'un seul tenant, ou cette interface peut prendre des formes variées, par exemple dans le but de favoriser sa tenue à l'effort ou dans le temps.

Le capteur 24 peut notamment être sensible aux contraintes qui lui sont appliquées. Il peut par exemple permettre la mesure de contraintes normales ou de cisaillement dans trois directions. Plusieurs exemples de ce type de capteur sont décrits dans le document EP 1 275 949.

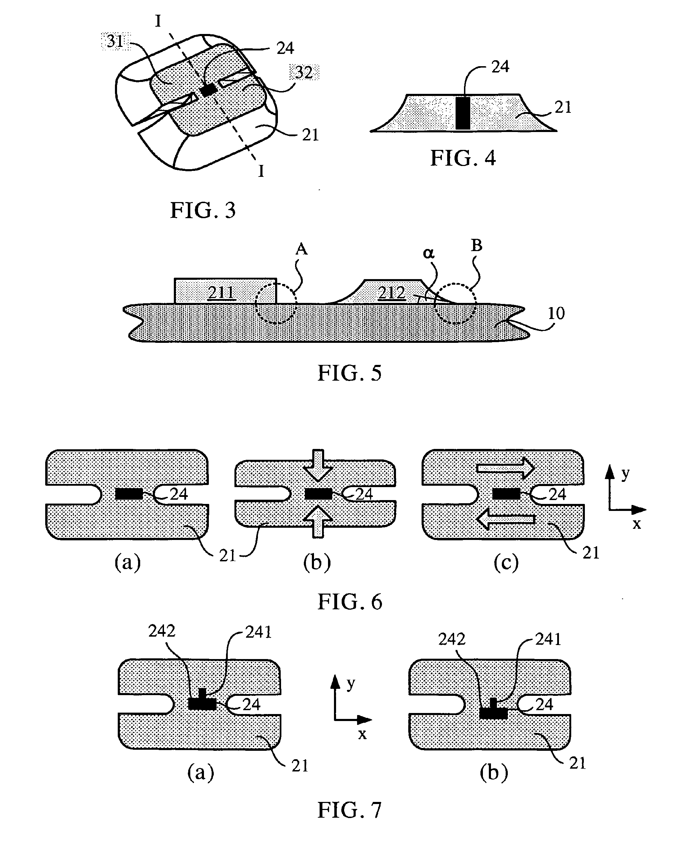

Dans le cas où le capteur 24 est conçu pour être sensible aux contraintes, le pied 21 doit assurer la conversion des déformations du pneumatique en contraintes et assurer leur concentration sur la partie sensible du capteur. La solution proposée utilise une structure « en H », représentée schématiquement en perspective à la figure 3. La figure 4 représente le même pied 21 en coupe selon la direction I-I (figure 3).

Une structure « en H » présente les avantages suivants :

- elle permet de concentrer les contraintes créées par les déformations sur le pont qui relie les deux barres 31 et 32 du « H », c'est-à-dire à l'emplacement choisi pour placer le capteur 24 ;

- elle permet de limiter la raideur apparente de l'emplâtre tout en conservant une bonne transmission des contraintes et donc de limiter les contraintes développées à l'interface avec le pneumatique lorsque celle-ci se déforme. De faibles contraintes d'interface permettent de se mettre dans de bonnes conditions pour l'endurance du collage du pied sur le pneumatique. Cela permet aussi de limiter l'effet de la présence de l'emplâtre sur les déformations du pneumatique ;

- elle préserve une surface de contact importante entre le pied et le pneumatique, ce qui limite encore l'intensité des contraintes d'interface.

La géométrie du pied 21 joue un rôle important pour la bonne tenue de l'ensemble dans le temps. En évitant des angles aigus et en prévoyant des transitions arrondies, il est possible de réduire de façon significative la concentration de contraintes susceptibles, entre autres, de créer des amorces de fissures. Ceci est tout particulièrement vrai sur le tour du pied où la raideur locale du pied est réduite. La figure 5 illustre ce constat. Elle représente en coupe partielle deux pieds 211 et 212 fixés sur un pneumatique 10. Dans le cas du pied 211, les contraintes générées à l'angle (zone A) sont considérables et peuvent entraîner une déchirure du pneumatique 10 dans cette zone, surtout si la rigidité du matériau constitutif du pneumatique 10 dans cette zone (par exemple, le mélange caoutchouteux de la gomme intérieure) est inférieure à celle du pied 211. En revanche, le pied 212 possède une géométrie telle que le risque de création d'une fissure dans la zone B est réduit. Une façon d'obtenir ce résultat est de réduire progressivement l'épaisseur du pied, mais d'autres manières d'arriver au même résultat peuvent être envisagées, comme par exemple la diminution progressive de la rigidité du matériau. On voit que l'angle alpha ($\alpha$) entre (i) la surface d'interface entre l'emplâtre et le pneumatique 10 et (ii) la tangente à la surface libre (c'est-à-dire non fixée sur le pneumatique) du pied 212 au contour de la surface d'interface entre l'emplâtre et le pneumatique 10 est inférieur à 45°.

Grâce à la forme « en H » du pied 21, celui-ci peut transmettre au capteur 24 les contraintes en conséquence des déformations du support sur lequel il est fixé. La figure 6 représente en vue de dessus un emplâtre selon l'invention sollicité selon les deux modes de transmission principaux. L'emplâtre 21 est au repos en figure 6 (a). En figure 6 (b), il est contracté suivant l'axe y et transmet une contrainte de compression sur le capteur 24. Si la structure était étendue suivant y, la contrainte générée serait de signe opposé. En figure 6 (c), l'emplâtre 21 est soumis à un cisaillement xy. Il génère au niveau du capteur 24 une contrainte de cisaillement correspondante. Sur ce type de sollicitation, la forme « en H » permet de conserver une raideur de cisaillement faible par rapport à d'autres structures plus massives.

Plusieurs possibilités sont offertes pour régler la sensibilité en compression et en cisaillement ; il est notamment possible d'adapter

- la rigidité du matériau qui constitue le pied ;

- le choix de la nature du matériau qui constitue le pont qui relie les deux barres du H : par exemple, un matériau compressible permettra de limiter les contraintes trop importantes ;

- la géométrie et la taille du pont qui relie les deux barres du « H ».

Dans le cas particulier où un capteur 24 de type « clou » est utilisé (voir, par exemple le brevet US 6 666 079) et où la partie sensible 241 du capteur 24 se situe sur l'une de ses faces, il est utile de décaler la position du capteur 24 de manière à recueillir les contraintes maximales, comme le montre la figure 7. En figure 7 (a) la partie 242 du capteur est centrée sur le pont qui relie les deux barres du « H ». Dans la configuration représentée à la figure 7 (b), la partie sensible du capteur 241 est centrée sur le pont de manière à subir le maximum de contraintes.

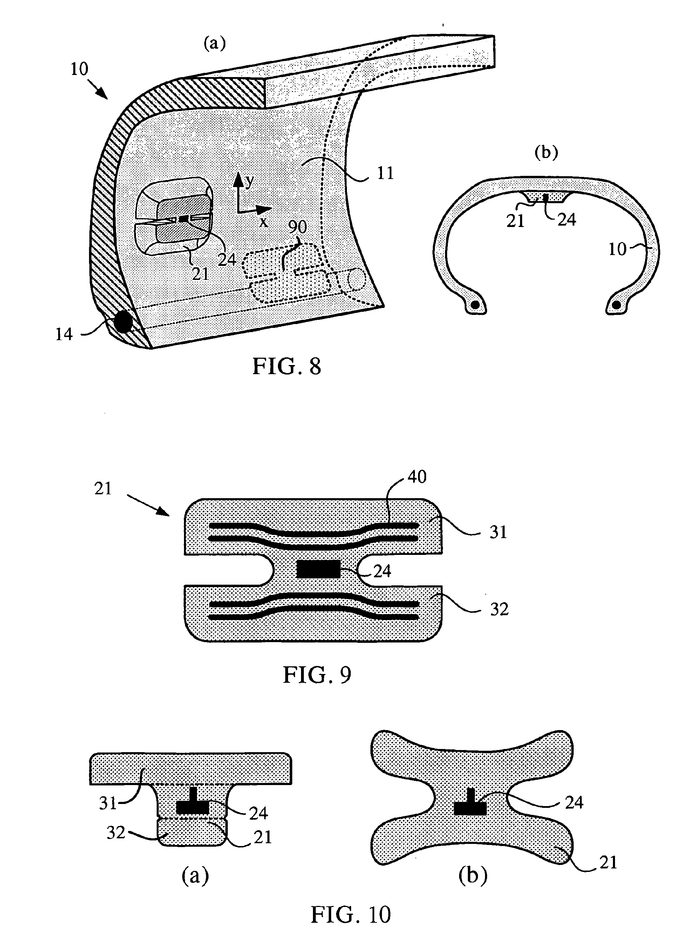

Selon un mode de réalisation préférentiel, le pied 21 peut être fixé sur le flanc 11 d'un pneumatique 10, comme cela est illustré à la figure 8(a). Dans la position représentée, l'emplâtre est très protégé et ne subit que de faibles déformations, dues principalement au montage sur la jante (non représentée). L'amplitude des variations est réduite et la contrainte due à la déradialisation du pneumatique assez faible. L'emplâtre est néanmoins soumis à une flexion assez importante autour du crochet de jante.

Rien n'empêche cependant de fixer le pied 21 radialement plus à l'intérieur, comme dans la position indiquée par la référence 90 ou encore sous le sommet du pneumatique 10, comme représenté schématiquement à la figure 8(b).

Il peut être nécessaire d'augmenter l'intensité des contraintes transmises au capteur 24 lorsque l'emplâtre subit une sollicitation de cisaillement de type xy ; une manière d'y parvenir consiste à modifier les caractéristiques des barres 31 et 32 du « H », de manière à les rendre moins ou non extensibles. La figure 9 présente, à titre d'exemple, une façon de réaliser ce mode de réalisation en incluant dans le matériau constitutif du pied des renforts 40, métalliques ou non. Les fils ou assemblages de fils 40 diminuent fortement l'extensibilité des barres 31 et 32 du « H », de sorte que le cisaillement de l'ensemble de la structure au niveau de l'interface avec le pneumatique s'applique sur le pont qui relie les deux barres 31 et 32 du « H ». Ce cisaillement est alors amplifié. Le nombre et la nature des renforts permettent de doser cet effet d'amplification.

De nombreuses variantes sont possibles. La figure 10 présente deux variantes, la figure 10 (a) correspondant à une réduction à l'extrême de la longueur de l'une des barres (32) du « H » et la figure 10 (b) à l'utilisation de barres courbes pour former le « H ».

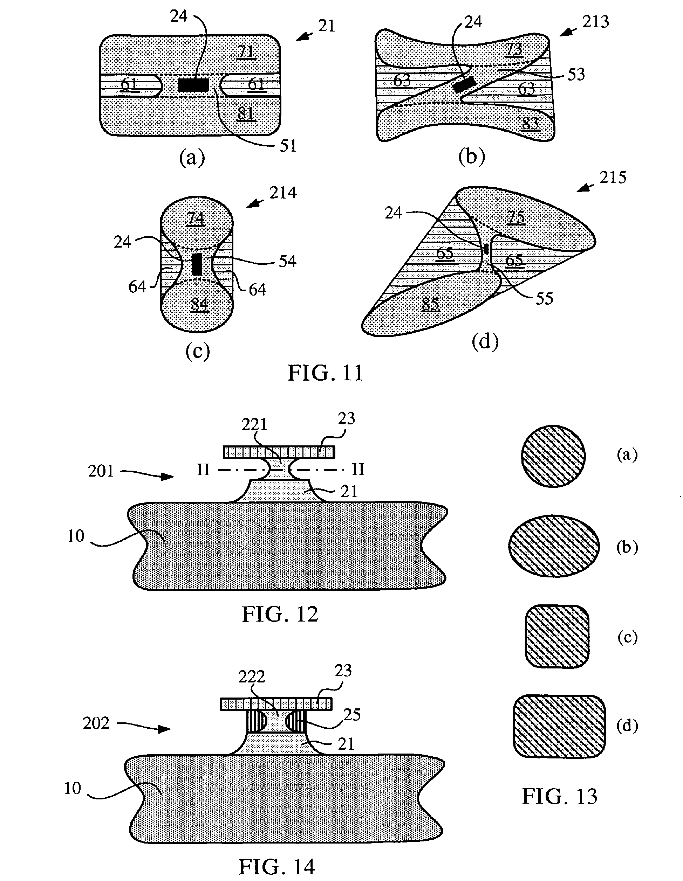

La figure 11 montre plusieurs variantes pour la géométrie du pied d'un emplâtre selon l'invention et illustre le critère géométrique qui définit un emplâtre selon l'invention. La figure 11 (a) représente un pied 21 en « H » comme décrit précédemment. On voit que la surface de la section du pont 51 est inférieure à la surface comprise entre les portions 71 et 81 du pied reliées par le pont 51 ; la différence est égale à la surface de la section 61. En l'occurrence, la surface de la section du pont 51 est inférieure à 30 % de la surface comprise entre les portions du pied 71 et 81 reliées par le pont 51. La figure 11 (b) représente un pied 213 en « Z ». De nouveau, la surface de la section du pont 53 est inférieure à la surface comprise entre les portions 73 et 83 du pied reliées par le pont 53 ; la différence est égale à la surface de la section 63. La figure 11 (c) représente un autre pied 214 selon l'invention. Ici encore, la surface de la section du pont 54 est inférieure à la surface comprise entre les portions 74 et 84 du pied reliées par le pont 54 ; la différence est égale à la surface de la section 64. Enfin, la figure 11 (d) représente un quatrième pied 215 selon l'invention. Comme dans les cas précédents, la surface de la section du pont 55 est inférieure à la surface comprise entre les portions 75 et 85 du pied reliées par le pont 55 ; la différence est égale à la surface de la section 65.

Dans tous les exemples représentés, à l'exception de Fig. 10(a), les deux portions du pied reliées par le pont ont la même géométrie, mais ce n'est pas une caractéristiques limitative de l'invention ; il est possible de prévoir des portions ayant une géométrie différente.

Le pied 21 étant fixé sur le pneumatique, il est soumis aux déformations de celui-ci et n'est pas conçu pour que sa partie supérieure (l'interface entre le pied 21 et le support 22, si elle existe) ne se déforme pas. Les figures suivantes présentent différentes géométries de support 22 destinées à empêcher la propagation des contraintes et des déformations vers la platine 23, dans le but de la préserver.

La figure 12 montre un mode de réalisation 201 basé sur un rétrécissement du support. Le support 221 est conçu dans la continuité du pied 21 et présente un rétrécissement dont l'importance permet de régler le taux de découplage entre pied 21 et platine 23. Le rétrécissement du support permet de tendre vers un contact quasi ponctuel et ainsi de ne pas générer de contraintes sur la platine 23.

La géométrie du rétrécissement n'est pas sans importance. La figure 13 présente quatre variantes pour la section du rétrécissement du support 221 dans le plan de coupe indiqué par la ligne II-II (figure 12). Les sections circulaires (figure 13 (a)) et à base de carré (figure 13 (c)) sont appropriées si aucune direction n'est privilégiée ; la section représentée à la figure 13 (a) permet d'avoir le même niveau de découplage dans toutes les directions. Les variantes représentées aux figures 13 (b) et (d) permettent, en jouant sur les proportions, d'obtenir un découplage différent suivant les directions.

La géométrie du support n'est pas le seul paramètre permettant de modifier le couplage entre le pied 21 et la platine 23 ; il est bien sûr possible de le modifier par le choix des matériaux, de manière à obtenir le découplage souhaité. Le matériau retenu peut être le même pour le support 22 que pour le pied 21 ou, au contraire, être différent. La conception de la géométrie doit bien sûr prendre en compte les caractéristiques mécaniques et particulièrement la rigidité du matériau retenu.

Lors de la conception du support (choix du matériau et de la géométrie), il est nécessaire de prendre en compte les effets liés à la centrifugation qui génèrent un chargement supplémentaire du support et notamment d'étudier ses fréquences de résonance. Du fait des déformations du pneumatique sur lequel est fixé l'emplâtre, celui-ci subit à chaque révolution une excitation. La durée de vie du support peut se trouver réduite si cette excitation est suffisante pour entraîner une réponse vibratoire libre de celui-ci. Idéalement, il est donc conseillé de choisir la géométrie et le matériau dans le but de déplacer le premier mode de vibration du support vers des fréquences assez hautes (200 Hz). Cette opération d'adaptation est à la portée de l'homme du métier qui peut se servir, par exemple, d'un modèle de poutre.

Dans le cas où il s'avèrerait impossible d'éviter la réponse libre du système, il est possible de l'amortir en plaçant judicieusement dans le support une partie en matériau amortissant. Le matériau retenu (par exemple une mousse) pourra être choisi pour dissiper de l'énergie dans la gamme de fréquence correspondant à la réponse libre du support. La figure 14 présente un emplâtre 202 utilisant un tel matériau amortissant. Sur cette figure, l'espace dégagé dans le support 222 par le rétrécissement est rempli par un matériau amortissant 25 de faible rigidité, de préférence compressible, par exemple une mousse.

Dans l'hypothèse d'un emplâtre constitué d'un pied contenant un capteur, plusieurs cas de figure peuvent se présenter : il est possible que le capteur doive être relié à une électronique de traitement placée sur la platine, mais on peut également envisager le cas où le capteur est pourvu d'une électronique de traitement miniaturisée et placée dans le pied, mais nécessite pour fonctionner une source d'énergie (par exemple une pile) ou une antenne placées sur la platine. Ces configurations sont citées à titre d'exemple et ne représentent pas une limitation de l'invention, toute autre configuration nécessitant une liaison électrique entre le pied et la platine étant bien sûr possible.

Dans ce type de configuration, le support doit assurer une fonction de liaison électrique entre les éléments du pied et ceux de la platine. Deux solutions sont proposées pour permettre la liaison électrique par fils conducteurs tout en conservant les propriétés mécaniques de découplage.

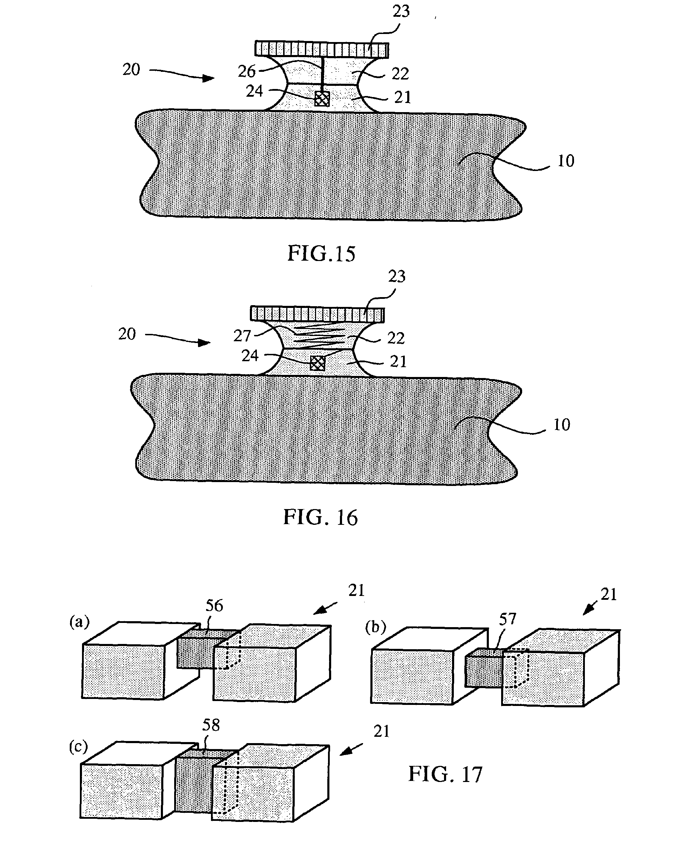

Dans une première configuration, représentée à la figure 15, il est proposé d'utiliser une liaison filaire 26, en l'occurrence perpendiculaire à la platine 23 et passant sensiblement le long de l'axe central du support 22, c'est-à-dire en passant au centre de la section représentée à la figure 12. En effet, l'axe central du support 22 est proche la fibre neutre de celui-ci lors d'une flexion. Or, de par sa conception, le mode de flexion est prédominant dans les déformations du support. Le fil 26 peut bien évidemment supporter ce mode de déformation.

Dans le cas où le support devrait aussi travailler en extension, le ou les fils conducteurs 26 pourraient alors être avantageusement remplacés par une forme en zigzague ou une hélice 27 permettant ce mode de déformation sans subir de fatigue.

Ce mode de réalisation est représenté à la figure 16. La liaison filaire entre le pied 21 et la platine 23 peut être réalisée sous forme d'une hélice 27 dont l'axe est en l'occurrence sensiblement perpendiculaire à la platine 23. Si plusieurs conducteurs sont requis, ils peuvent former plusieurs hélices décalées les unes par rapport aux autres ou au contraire être réunis pour former un câble à plusieurs conducteurs lui-même disposé en hélice dans le support 22.

La figure 17 représente schématiquement des vues en perspective d'emplâtres selon l'invention. Elle illustre la différence entre des emplâtres en « H » dont les ponts 56 et 57 ont, dans une coupe (et en l'occurrence même dans une pluralité de coupes) parallèle à la surface du pied destinée à être fixée sur le pneumatique, une section dont la surface est inférieure à la surface comprise entre les portions du pied reliées par le pont (figures 17(a) et (b)) et un emplâtre dont le pont 58 a, dans *toute* coupe parallèle à la surface du pied destinée à être fixée sur le pneumatique, une section dont la surface est inférieure à la surface comprise entre les portions du pied reliées par le pont (figure 17(c)). La variante représentée à la figure 17(c) a l'avantage d'être plus facile à réaliser ; les variantes des figures 17(a) et (b) sont plus difficiles à mettre en oeuvre, mais permettent de mieux contrôler les contraintes subies par le capteur qui est couplé mécaniquement au pont.

La figure 18 illustre comment on peut déterminer la surface comprise entre les portions du pied pour des géométries de pied complexes. La figure 18(a) représente le pied 216 d'un emplâtre dans une coupe parallèle à la surface du pied destinée à être fixée sur un pneumatique. Dans cette coupe, le pied 216 comprend deux portions 76 et 86 ainsi qu'un pont 59 reliant ces deux portions. Dans certain cas, la délimitation d'une portion par rapport au pont peut être délicate (comme ici pour la portion 86). Si la géométrie de la portion ne suggère pas naturellement une délimitation (comme elle le fait pour les emplâtres des figures 11(b), (c), et (d), mais aussi pour la portion 76 de la figure 18(a)), on peut considérer que l'interface entre une portion et le pont dans une coupe donnée est définie par une droite reliant deux points du contour du pied de courbure infinie. Cette droite est indiquée en pointillé pour la portion 86.

Ayant déterminé le contour de chacune des portions du pied dans la coupe considérée, on détermine, dans un deuxième temps, pour chacune des portions, la boucle fermée de longueur minimale qui entoure la portion, en l'occurrence les boucles 176 et 186. Le résultat est représenté à la figure 18(b). On peut imaginer chacune de ces boucles fermées comme la trace d'un élastique qui se serait contracté autour de la trace de la portion concernée dans la coupe. La surface délimitée par la boucle (I) est désigné par $S_I$.

Enfin, on détermine la boucle fermée de longueur minimale qui entoure le pied dans la coupe considérée, en l'occurrence la boucle 196 (figure 18(c)). Cette boucle 196 délimite une surface $S_0$. La surface S comprise entre les portions du pied peut alors être obtenue par simple soustraction :

$$S = S_0 - \sum_I S_I$$

Pour un pied comme celui de la figure 18(a), où le pont ne relie que deux portions, on obtient $S = S_0 - S_1 - S_2$ (voir figure 18(d)).

Cette surface S comprise entre les portions du pied est alors comparée à la surface du pont 59. Dans l'exemple de la figure 18, la surface du pont 59 est très significativement inférieure à la surface S comprise entre les portions du pied reliées par le pont 59.

**Revendications**

1.  Emplâtre (20 ; 201 ; 202) destiné à fixer un système électronique sur un pneumatique (10), l'emplâtre comportant un pied (21 ; 213 ; 214 ; 215) ayant une surface destinée à être fixée sur le pneumatique, le pied comportant au moins deux portions (31, 32 ; 71, 81 ; 73, 83 ; 74, 84; 75, 85) reliées entre elles par au moins un pont (51 ; 53 ; 54 ; 55) faisant partie intégrante du pied, ce pont ayant, dans une coupe parallèle à la surface du pied destinée à être fixée sur le pneumatique, une section dont la surface est inférieure à la surface comprise entre les portions du pied reliées par le pont dans la même coupe, l'emplâtre étant **caractérisé en ce que** le pont relie continûment, dans ladite coupe, les deux portions.

2.  Emplâtre (20; 201 ; 202) selon la revendication 1, dans lequel la surface de la section du pont (51 ; 53 ; 54; 55), dans une coupe parallèle à la surface du pied (21 ; 213 ; 214 ; 215) destinée à être fixée sur le pneumatique (10), est inférieure à 30 % de la surface comprise entre les portions (31, 32 ; 71, 81 ; 73, 83 ; 74, 84 ; 75, 85) du pied reliées par le pont dans la même coupe.

3.  Emplâtre (20 ; 201 ; 202) selon la revendication 1, dans lequel le pont (51 ; 53 ; 54 ; 55) a, dans toute coupe parallèle à la surface du pied (21 ; 213 ; 214; 215) destinée à être fixée sur le pneumatique (10), une section dont la surface est inférieure à la surface comprise entre les portions du pied reliées par le pont dans la même coupe.

4.  Emplâtre (20; 201 ; 202) selon la revendication 3, dans lequel la surface de la section du pont (51 ; 53 ; 54; 55), dans toute coupe parallèle à la surface du pied (21 ; 213 ; 214 ; 215) destinée à être fixée sur le pneumatique (10), est inférieure à 30 % de la surface comprise entre les portions du pied reliées par le pont dans la même coupe.

5.  Emplâtre (20 ; 201 ; 202) selon l'une des revendications 1 à 4, dans lequel le pied (21), dans une coupe parallèle à la surface du pied destinée à être fixée sur le pneumatique, a une section en « H ».

6.  Emplâtre (20 ; 201 ; 202) selon l'une des revendications 1 à 4, dans lequel le pied (213), dans une coupe parallèle à la surface du pied destinée à être fixée sur le pneumatique, a une section en « Z ».

7.  Emplâtre (20 ; 201 ; 202) selon l'une quelconque des revendications 1 à 6, dans lequel le pied (21 ; 213 ; 214 ; 215) est réalisé dans un matériau caoutchouteux.

8.  Emplâtre (20 ; 201 ; 202) selon l'une quelconque des revendications 1 à 7, dans lequel les portions (31, 32) du pied (21 ; 213 ; 214 ; 215) reliées par le pont (51 ; 53; 54 ; 55) sont renforcées à l'aide de renforts (40).

9.  Emplâtre (20; 201 ; 202) selon l'une quelconque des revendications 1 à 8, dans lequel l'emplâtre comprend en outre un support (22 ; 221 ; 222) distinct du pied (21) et destiné à porter un élément (23) du système électronique, de sorte qu'il n'y a pas de contact direct entre le pied et ledit élément.

10. Emplâtre (20 ; 201 ; 202) selon la revendication 9, dans lequel le support (22 ; 221 ; 222) comprend des moyens pour isoler ledit élément (23) du système électronique des contraintes et déformations subies par le pied (21).

**11.** Emplâtre (20; 201 ; 202) selon la revendication 10, dans lequel ledit élément (23) du système électronique est isolé à l'aide d'un rétrécissement du support (221 ; 222) par rapport à une direction perpendiculaire à la surface du pied (21) destinée à être fixée sur le pneumatique (10).

**12.** Emplâtre (20 ; 201 ; 202) selon la revendication 11, dans lequel ledit rétrécissement est comblé par un matériau (25) compressible de faible rigidité.

**13.** Emplâtre (20 ; 201 ; 202) selon l'une quelconque des revendications précédentes, dans lequel la géométrie du pied (21 ; 213 ; 214 ; 215) est telle que, lorsque l'emplâtre est fixé sur un pneumatique (10), l'angle alpha (α) entre :

   - la surface d'interface entre l'emplâtre et le pneumatique, et
   - la tangente à la surface libre, c'est-à-dire non fixée au pneumatique, du pied en tout point du contour de la surface d'interface entre l'emplâtre et le pneumatique

est inférieur à 90°.

**14.** Ensemble formé par un emplâtre (20; 201 ; 202) selon l'une quelconque des revendications 9 à 13 et un système électronique comportant un capteur (24), couplé mécaniquement au pont (51 ; 53 ; 54 ; 55) du pied de l'emplâtre.

**15.** Ensemble selon la revendication 14, dans lequel le système électronique comporte en outre au moins un élément (23) différent du capteur (24), dans lequel l'emplâtre possède un axe de symétrie perpendiculaire à la surface du pied destinée à être fixée sur le pneumatique (10) et dans lequel une liaison électrique entre le capteur (24) et ledit élément (23) du système électronique est assurée par un fil conducteur (26) passant sensiblement le long de cet axe.

**16.** Ensemble selon la revendication 14, dans lequel le système électronique comporte en outre au moins un élément (23) différent du capteur (24), dans lequel l'emplâtre possède un axe de symétrie perpendiculaire à la surface du pied (21) destinée à être fixée sur le pneumatique (10), et dans lequel la liaison électrique entre le capteur (24) et ledit élément (23) du système électronique est assurée par un conduit (27) extensible tel un ressort hélicoïdal centré autour de cet axe.

**17.** Ensemble selon l'une quelconque des revendications 14 à 16, dans lequel le capteur (24) est un capteur permettant de mesurer des contraintes normales et/ou de cisaillement en trois directions.

**18.** Pneumatique (10) comprenant un ensemble selon l'une quelconque des revendications 14 à 17.

**Claims**

**1.** A patch (20 ; 201 ; 202) intended to fix an electronic system to a tyre (10), the patch having a foot (21 ; 213 ; 214 ; 215) with a surface intended to be fixed to the tyre, the foot having at least two portions (31, 32; 71, 81 ; 73, 83 ; 74, 84 ; 75, 85) connected to one another by at least one bridging element (51; 53 ; 54 ; 55) integral with the foot, this bridging element having, in a section which is parallel to the surface of the foot that is intended to be fixed to the tyre, a surface area which is smaller than the surface area in the same section between those portions of the foot which are connected by the bridging element, **characterized in that** the bridging element continuously connects the two portions in the same section.

**2.** A patch (20 ; 201 ; 202) according to Claim 1, wherein the surface area of the bridging element (51 ; 53 ; 54 ; 55) in a section which is parallel to that surface of the foot (21 ; 213 ; 214 ; 215) intended to be fixed to the tyre (10) is less than 30% of the surface area in the same section between the portions (31, 32 ; 71, 81 ; 73, 83 ; 74, 84 ; 75, 85) of the foot connected by the bridging element.

**3.** A patch (20 ; 201 ; 202) according to Claim 1, wherein the bridging element (51 ; 53 ; 54 ; 55) has, in any section which is parallel to the surface of the foot (21; 213; 214 ; 215) intended to be fixed to the tyre (10), a surface area which is smaller than the surface area in the same section between those portions of the foot which are connected by the bridging element.

**4.** A patch (20 ; 201 ; 202) according to Claim 3, wherein the surface area of the bridging element (51; 53 ; 54 ; 55) in any section parallel to the surface of the foot (21 ; 213 ; 214 ; 215) intended to be fixed to the tyre (10) is less than 30% of the surface area in the same section between those portions of the foot which are connected by the bridging element.

**5.** A patch (20 ; 201 ; 202) according to one of Claims 1 to 4, wherein the foot (21) has, in a section which is parallel to the surface of the foot intended to be fixed to the tyre, the shape of an H.

**6.** A patch (20 ; 201 ; 202) according to one of Claims 1 to 4, wherein the foot (213) has, in a section which is parallel to the surface of the foot intended to be fixed to the tyre, the shape of a Z.

7. A patch (20 ; 201 ; 202) according to any one of Claims 1 to 6, the foot (21 ; 213 ; 214 ; 215) is made of a rubber material.

8. A patch (20 ; 201 ; 202) according to any one of Claims 1 to 7, wherein the portions (31, 32) of the foot (21 ; 213 ; 214 ; 215) which are connected by the bridging element (51 ; 53 ; 54 ; 55) are reinforced with reinforcing elements (40).

9. A patch (20 ; 201 ; 202) according to any one of Claims 1 to 8, wherein the patch moreover comprises a support (22 ; 221 ; 222) which is separate from the foot (21) and is intended to carry an element (23) of the electronic system, such that there is no direct contact between the foot and the said element.

10. A patch (20 ; 201 ; 202) according to Claim 9, wherein the support (22 ; 221 ; 222) comprises means of isolating the said element (23) of the electronic system from the stresses and deformations which the foot (21) undergoes.

11. A patch (20 ; 201 ; 202) according to Claim 10, wherein the said element (23) of the electronic system is isolated by means of a narrowing in the support (221 ; 222) with respect to a direction perpendicular to that surface of the foot (21) intended to be fixed to the tyre (10).

12. A patch (20 ; 201 ; 202) according to Claim 11, wherein the said narrowing is filled up with a low-rigidity compressible material (25).

13. A patch (20 ; 201 ; 202) according to any one of the preceding claims, wherein the geometry of the foot (21 ; 213 ; 214 ; 215) is such that, when the patch is fixed to a tyre (10), the angle alpha (α) between :

- the interface surface between the patch and the tyre and
- the tangent to the free surface of the foot, i.e. the surface not fixed to the tyre, at any point on the contour of the interface surface between the patch and the tyre

is less than 90°.

14. An assembly comprising a patch (20 ; 201 ; 202) according to any one of Claims 9 to 13, and an electronic system comprising a sensor (24), the sensor being coupled mechanically to the bridging element (51 ; 53 ; 54 ; 55) of the foot of the patch.

15. An assembly according to Claim 14, wherein the electronic system further comprises an element (23) other than the sensor (24), wherein the patch has an axis of symmetry perpendicular to the surface of the foot intended to be fixed to the tyre (10), and wherein an electrical connection between the sensor (24) and the said element (23) of the electronic system is provided by a conductive wire (26) extending substantially along this axis.

16. An assembly according to Claim 14, wherein the electronic system further comprises an element (23) other than the sensor (24), wherein the patch has an axis of symmetry perpendicular to the surface of the foot (21) intended to be fixed to the tyre (10), and wherein an electrical connection between the sensor (24) and the said element (23) of the electronic system is provided by an extensible conductor (27) such as a helical spring centred on this axis.

17. An assembly according to any one of Claims 14 to 16, wherein the sensor (24) is a sensor allowing normal stresses and/or shear stresses to be measured in three directions.

18. A tyre (10) comprising an assembly according to any one of Claims 14 to 17.

**Patentansprüche**

1. Patch (20; 201; 202), der dazu bestimmt ist, ein elektronisches System an einem Luftreifen (10) zu befestigen, wobei der Patch einen Fuß (21; 213; 214; 215) mit einer Fläche aufweist, die an dem Luftreifen befestigt werden soll, wobei der Fuß mindestens zwei Teile (31, 32; 71, 81; 73, 83; 74, 84; 75, 85) aufweist, die durch mindestens eine Brücke (51; 53; 54; 55), welche einen integralen Teil des Fußes bildet, miteinander verbunden sind, wobei diese Brücke in einem parallel zu der Fläche des Fußes, die an dem Luftreifen befestigt werden soll, verlaufenden Schnitt ein Profil aufweist, dessen Fläche kleiner ist als die Fläche, die zwischen den Teilen des Fußes enthalten ist, welche im gleichen Schnitt durch die Brücke verbunden werden, **dadurch gekennzeichnet, dass** die Brücke in dem Schnitt die beiden Teile durchgängig verbindet.

2. Patch (20; 201; 202) nach Anspruch 1, wobei die Fläche des Profils der Brücke (51; 53; 54; 55) in einem parallel zu der Fläche des Fußes (21; 213; 214; 215), die an dem Luftreifen (10) befestigt werden soll, verlaufenden Schnitt kleiner als 30% der Fläche ist, die zwischen den Teilen (31, 32; 71, 81; 73, 83; 74, 84; 75, 85) des Fußes liegt, die durch die Brücke im gleichen Schnitt verbunden werden.

3. Patch (20; 201; 202) nach Anspruch 1, wobei die Brücke (51; 53; 54; 55) in jedem parallel zu der Fläche des Fußes (21; 213; 214; 215), die an dem Luftreifen (10) befestigt werden soll, verlaufenden Schnitt ein Profil aufweist, dessen Fläche kleiner als die Fläche ist, die zwischen den Teilen des Fußes enthalten ist, die in dem gleichen Schnitt durch die Brücke verbunden werden.

4. Patch (20; 201; 202) nach Anspruch 3, wobei die Fläche des Profils der Brücke (51; 53; 54; 55) in jedem parallel zu der Fläche des Fußes (21; 213; 214; 215), die an dem Luftreifen (10) befestigt werden soll, verlaufenden Schnitt kleiner als 30% der Fläche ist, die zwischen den Teilen des Fußes enthalten ist, die in dem gleichen Schnitt durch die Brücke verbunden werden.

5. Patch (20; 201; 202) nach einem der Ansprüche 1 bis 4, wobei der Fuß (21) in einem parallel zu der Fläche des Fußes, die an dem Luftreifen befestigt werden soll, verlaufenden Schnitt ein "H"-Profil aufweist.

6. Patch (20; 201; 202) nach einem der Ansprüche 1 bis 4, wobei der Fuß (213) in einem parallel zu der Fläche des Fußes, die an dem Luftreifen befestigt werden soll, verlaufenden Schnitt ein "Z"-Profil aufweist.

7. Patch (20; 201; 202) nach einem der Ansprüche 1 bis 6, wobei der Fuß (21; 213; 214; 215) aus einem Kautschukmaterial hergestellt ist.

8. Patch (20; 201; 202) nach einem der Ansprüche 1 bis 7, wobei die Teile (31, 32) des Fußes (21; 213; 214; 215), die durch die Brücke (51; 53; 54; 55) verbunden werden, mit Verstärkungen (40) verstärkt sind.

9. Patch (20; 201; 202) nach einem der Ansprüche 1 bis 8, wobei der Patch des Weiteren einen Träger (22; 221; 222) aufweist, der von dem Fuß (21) verschieden ist und ein Element (23) des elektronischen Systems tragen soll, so dass kein direkter Kontakt zwischen dem Fuß und dem Element besteht.

10. Patch (20; 201; 202) nach Anspruch 9, wobei der Träger (22; 221; 222) Mittel zur Isolierung des Elements (23) des elektronischen Systems gegen Spannungen und Verformungen, die der Fuß (21) erfährt, umfasst.

11. Patch (20; 201; 202) nach Anspruch 10, wobei das Element (23) des elektronischen Systems mit Hilfe einer Verengung des Trägers (221; 221) bezüglich einer senkrecht zu der Fläche des Fußes (21), die an dem Luftreifen (10) befestigt werden soll, verlaufenden Richtung isoliert wird.

12. Patch (20; 201; 202) nach Anspruch 11, wobei die Verengung durch ein komprimierbares Material (25) mit geringer Steifigkeit gefüllt ist.

13. Patch (20; 201; 202) nach einem der vorhergehenden Ansprüche, wobei die Geometrie des Fußes (21; 213; 214; 215) derart ist, dass bei Befestigung des Patches an einem Luftreifen (10) der Winkel Alpha (α) zwischen:

   - der Grenzfläche zwischen dem Patch und dem Luftreifen und
   - der Tangente der freien Fläche, das heißt der nicht an dem Luftreifen befestigten Fläche, des Fußes an jeder Stelle der Kontur der Grenzfläche zwischen dem Patch und dem Luftreifen

   kleiner als 90° ist.

14. Durch einen Patch (20; 201; 202) nach einem der Ansprüche 9 bis 13 und ein elektronisches System mit einem Sensor (24), der mechanisch an die Brücke (51; 53; 54; 55) des Fußes des Patches gekoppelt ist, gebildete Anordnung.

15. Anordnung nach Anspruch 14, wobei das elektronische System des Weiteren mindestens ein Element (23) aufweist, das von dem Sensor (24) verschieden ist, wobei der Patch eine senkrecht zu der Fläche des Fußes, die an dem Luftreifen (10) befestigt werden soll, verlaufende Symmetrieachse aufweist, und wobei eine elektrische Verbindung zwischen dem Sensor (24) und dem Element (23) des elektronischen Systems durch eine im Wesentlichen entlang dieser Achse verlaufende Drahtleitung (26) gewährleistet wird.

16. Anordnung nach Anspruch 14, wobei das elektronische System des Weiteren mindestens ein Element (23) aufweist, das von dem Sensor (24) verschieden ist, wobei der Patch eine senkrecht zu der Fläche des Fußes (21), die an dem Luftreifen (10) befestigt werden soll, verlaufende Symmetrieachse aufweist, und wobei die elektrische Verbindung zwischen dem Sensor (24) und dem Element (23) des elektronischen Systems durch eine ausziehbare Leitung (27), wie zum Beispiel eine um diese Achse zentrierte Schraubenfeder, gewährleistet wird.

17. Anordnung nach einem der Ansprüche 14 bis 16, wobei der Sensor (24) ein Sensor ist, der die Messung von Normalspannungen und/oder Scherspannungen in drei Richtungen gestattet.

18. Luftreifen (10), der eine Anordnung nach einem der Ansprüche 14 bis 17 umfasst.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG.15

FIG. 16

FIG. 17

(a)

76

216

59

86

(b)

176

186

(c)

S₀

196

(d)

S₁

S

S₂

FIG. 18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6462650 B
- WO 03076216 A
- US 20050076982 A
- US 20050076992 A
- US 20050126668 A
- DE 19940086
- US 20060237109 A
- WO 2007048621 A
- US 20050217774 A
- US 2006006728 A
- EP 1275949 A
- US 6666079 B